# EUROPEAN PATENT APPLICATION

(11) **EP 4 817 476 A1**
(43) Date of publication of application: **07.10.2026**
(21) Application number: 24808530.0
(22) Date of filing: 11.09.2024
(51) Int. Cl.: A47J 19/02, A47J 19/06, A47J 43/07

(54) **JUICER**

(30) Priority: 29.11.2023 KR 20230170010; 18.12.2023 KR 20230184897
(71) Applicant: NUC Electronics Co., Ltd., Daegu 41548 (KR)
(72) Inventor: KIM, Jong Boo, Daegu 41573 (KR)
(74) Representative: Cabinet Beau de Loménie
(86) International application number: PCT/KR2024/013806
(87) International publication number: WO 2025/116232

(57) **Abstract**

A juice extractor according to a first embodiment of the present disclosure includes a main container including an accommodation space in which food materials are accommodated and a processing member provided in the accommodation space to process the food materials; a container lid detachably coupled to the main container and covers at least a portion of the accommodation space; a body on which the main container is seated and connected to the processing member to operate the processing member; and an extension container selectively coupled between the main container and the container lid, and forming an expansion space connected to the accommodation space, in which once the extension container is coupled to the main container, the container lid is detachably coupled to the extension container and covers at least a portion of the expansion space

## Description

### [Technical Field]

The present disclosure relates to a juice extractor, and more specifically, to a juice extractor that is capable of expanding an accommodation space for food materials.

### [Background Art]

When using a conventional hopper-type juice extractor, a user needs a process to prepare food materials by cutting them into a size that can be inserted into an inlet of the hopper. However, an accommodation space formed inside the hopper has a limited size. When the food materials are put into the hopper, a situation may arise in which additional food materials cannot be added into the limited accommodation space of the hopper depending on their cut shapes or cut sizes. That is, even when there is room in the accommodation space of the hopper, a situation may arise in which no more food materials can be added.

In addition, in a situation that an amount of prepared food materials is excessive compared to a size of the accommodation space of the hopper and the food materials cannot be put into the hopper at once, remaining food materials need to be added additionally after the processing of the food materials added first is gradually completed. When additional food materials are added, the juice extractor for the hopper usually stops operating for the user's safety. In this case, it is cumbersome to frequently check the completion state of the juice of the food materials added first and to operate the juice extractor again for the hopper.

### [Disclosure]

### [Technical Problem]

The present invention is devised to solve the above problems, and the purpose of the present invention is to provide a juice extractor that is configured to increase an accommodation space for food materials.

The problems of the present invention are not limited to the problems mentioned above, and other problems not mentioned will be clearly understood by those skilled in the art from the description below.

### [Technical Solution]

A juice extractor according to a first embodiment of the present disclosure for solving the above problems includes a main container including an accommodation space in which food materials are accommodated and a processing member provided in the accommodation space to process the food materials; a container lid detachably coupled to the main container and covers at least a portion of the accommodation space; a body on which the main container is seated and connected to the processing member to operate the processing member; and an extension container selectively coupled between the main container and the container lid, and forming an expansion space connected to the accommodation space, in which once the extension container is coupled to the main container, the container lid is detachably coupled to the extension container and covers at least a portion of the expansion space.

Other specific details of the present invention are included in the detailed description and drawings.

### [Advantageous Effects]

According to embodiments of the present invention, at least following effects are obtained.

The present invention may increase an accommodation space for food materials without changing existing parts of a juice extractor.

The present invention has an advantage of reducing manufacturing costs and improving user convenience, by configuring a container lid compatible with and detachable from both a main container and an extension container.

The present invention has an advantage that a size of the juice extractor before the extension container is added may be minimized, to facilitate storage in a narrow space, by freely expanding an accommodation space for food materials.

The present invention has an advantage of preventing safety accidents, by detecting whether the main container and the extension container are open and closed and stopping the operation when they are open.

The present invention has an advantage of improving convenience of use, by expanding an inlet of the extension container.

The effects according to the present invention are not limited to the contents exemplified above, and further various effects are included in the present specification.

### [Description of Drawings]

FIG. 1 is a perspective view of a juice extractor according to a first embodiment of the present disclosure.
FIG. 2 is a perspective view of FIG. 1 excluding a body.
FIG. 3 is a perspective view of a main container of FIG. 1.
FIG. 4 is a perspective view of an extension container of FIG. 1.
FIG. 5 is a cross-sectional view taken along line V-V of FIG. 2.
FIG. 6 is a cross-sectional view taken along line VI-VI of FIG. 2.
FIG. 7 is a perspective view illustrating a first safety sensor portion of the main container and a second safety sensor portion of the extension container of FIG. 2.
FIG. 8 is an enlarged view of a region VIII of FIG. 5.
FIG. 9 is a side view of a main container handle, an extension container handle, and a container lid in an open state according to the first embodiment of the present disclosure.
FIG. 10 is an exploded perspective view of the main container, the extension container, and the container lid according to the first embodiment of the present disclosure.
FIG. 11 is a partially exploded view of an extension container handle of FIG. 12.
FIG. 12 is a view showing a process in which a body of the extension container and a main container body of the juice extractor according to the first embodiment of the present disclosure are separated, and the lid of the extension container is open.
FIG. 13 is an enlarged view of a region XIII of FIG. 12.
FIG. 14 is a cross-sectional view showing a process of mounting the extension container according to the first embodiment of the present disclosure.
FIG. 15 is a cross-sectional view showing another embodiment of the main container and the extension container of FIG. 5.
FIG. 16 is a cross-sectional view showing a process of mounting the extension container of FIG. 15.
FIG. 17 is a cross-sectional view of a juice extractor according to a second embodiment of the present disclosure.
FIG. 18 is a cross-sectional view showing a process of mounting an extension container according to the second embodiment of the present disclosure.
FIG. 19 is a cross-sectional view of a juice extractor according to a third embodiment of the present disclosure.
FIG. 20 is a view showing a process of lifting an extension container according to the third embodiment of the present disclosure.
FIG. 21 is a cross-sectional view of a juice extractor according to a fourth embodiment of the present disclosure.

### [Detailed Description of the Illustrated Embodiments]

The advantages and features of the present invention and methods for achieving them will become apparent with reference to the embodiments described in detail below along with the accompanying drawings. However, the present invention is not limited to the embodiments disclosed below and may be implemented in various different forms, the present embodiments are provided to ensure that the disclosure of the present invention is complete and to fully inform those skilled in the art of the scope of the invention, and the present invention is defined only by the scope of the claims.

In addition, the embodiments described in this specification will be described with reference to cross-sectional views and/or schematic diagrams that are ideal example drawings of the present invention. Accordingly, the forms of the example drawings may be modified depending on manufacturing technology and/or tolerance, and the like. In addition, in each drawing shown in the present invention, respective elements may be shown somewhat enlarged or reduced in consideration of convenience of description. Like reference numerals refer to like elements throughout the specification. The specification of the present invention omits the description of the general function and structure of a juice extractor 10, and only describes the content related to the present invention.

Hereinafter, the present invention will be described with reference to the drawings for illustrating a juice extractor according to a first embodiment of the present disclosure.

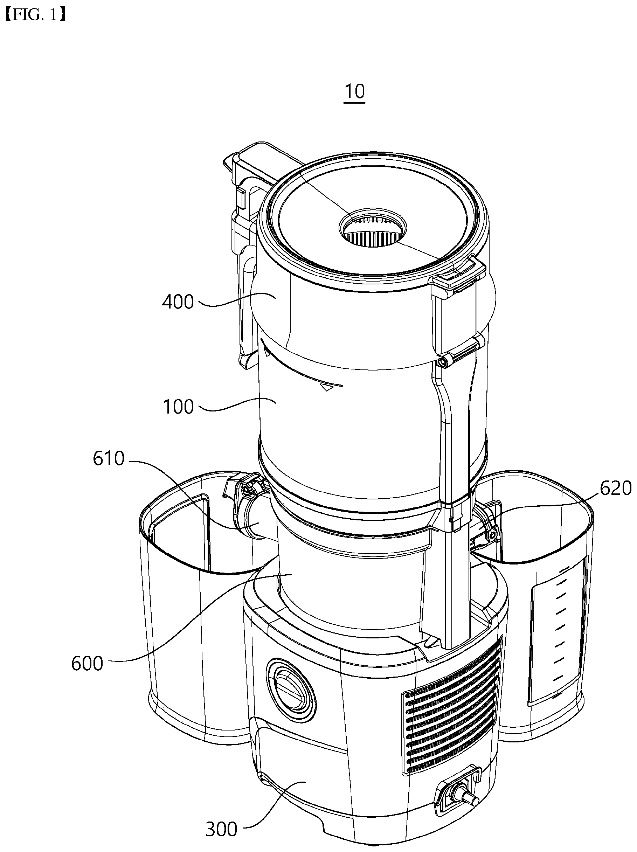

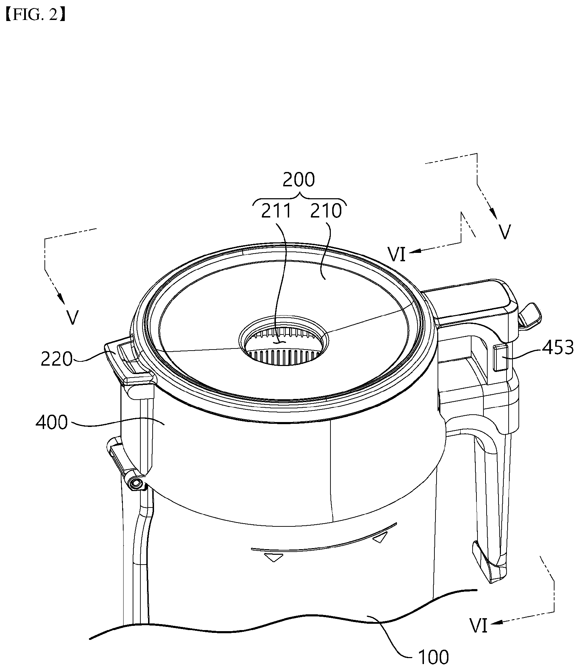

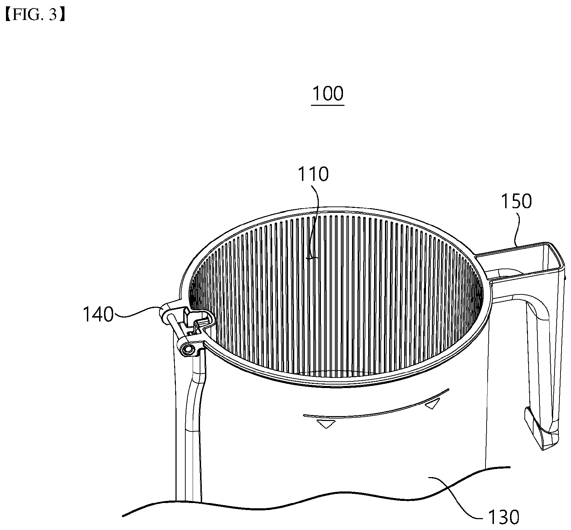

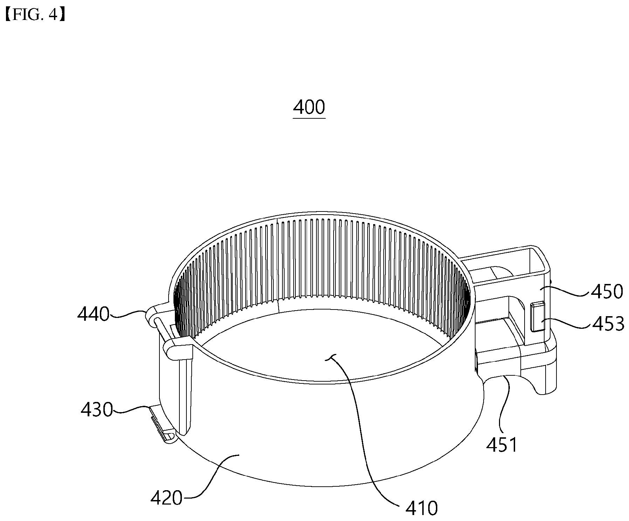

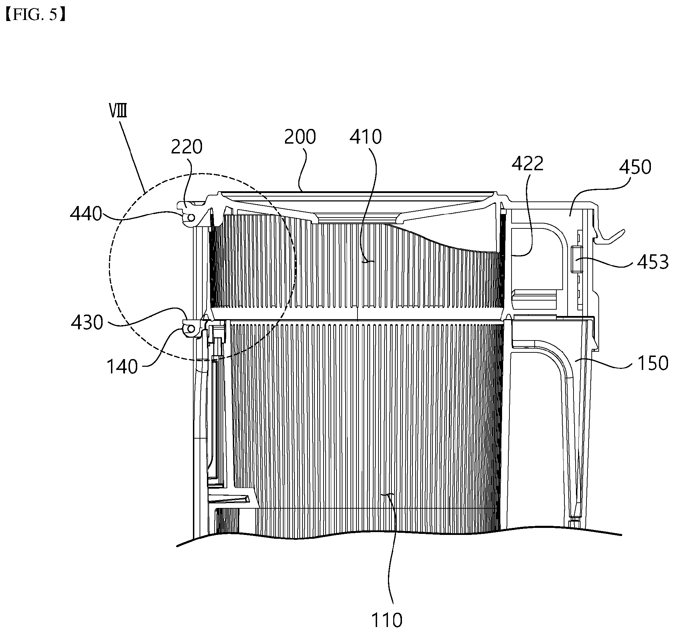

FIG. 1 is a perspective view of a juice extractor according to a first embodiment of the present disclosure, FIG. 2 is a perspective view of FIG. 1 excluding a body, FIG. 3 is a perspective view of a main container of FIG. 1, FIG. 4 is a perspective view of an extension container of FIG. 1, and FIG. 5 is a cross-sectional view taken along line V-V of FIG. 2.

Referring to FIGs. 1 to 5, a juice extractor 10 according to the first embodiment of the present disclosure is configured to enlarge an accommodation space 110 for food materials, and includes a main container 100, a container lid 200, a body 300 and an extension container 400.

The main container 100 has a space to accommodate food materials, and the food materials are processed in the accommodation space 110. The main container 100 may include a main container body 130 and a main container coupling portion 140. The main container body 130 forms the accommodation space 110, and a processing member P such as a container blade, a cutting knife, and the like for processing food materials may be installed.

The main container body 130 may be formed in a cylindrical shape with its upper portion and lower portion open, to form the accommodation space. The main container body 130 may be formed in various shapes, such as a cylinder or a square cylinder with its upper portion and lower portion open.

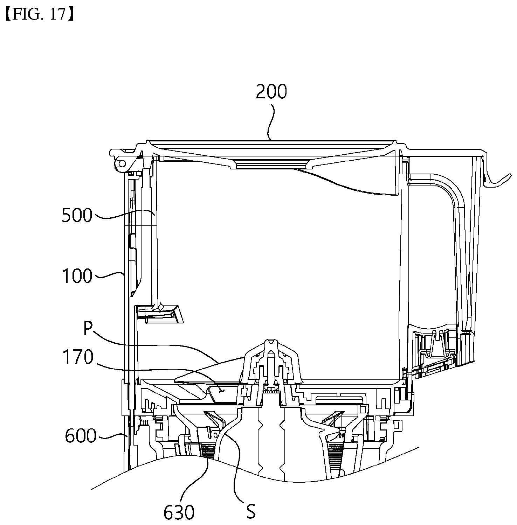

An input hole 170 (see FIG. 17) having a space connected to a juice extraction portion 600 of the body 300 may be formed in the lower portion of the main container body 130, which will be described later. The input hole 170 is a passage through which food materials that are cut to an appropriate size for juice extraction by the processing member P are put from the accommodation space 110 into the juice extraction portion 600.

The extension container 400 or the container lid 200 may be mounted on the upper portion of the main container body 130. The main container coupling portion 140 may be formed on one side of the main container body 130, and a main container handle 150 may be formed on the other side.

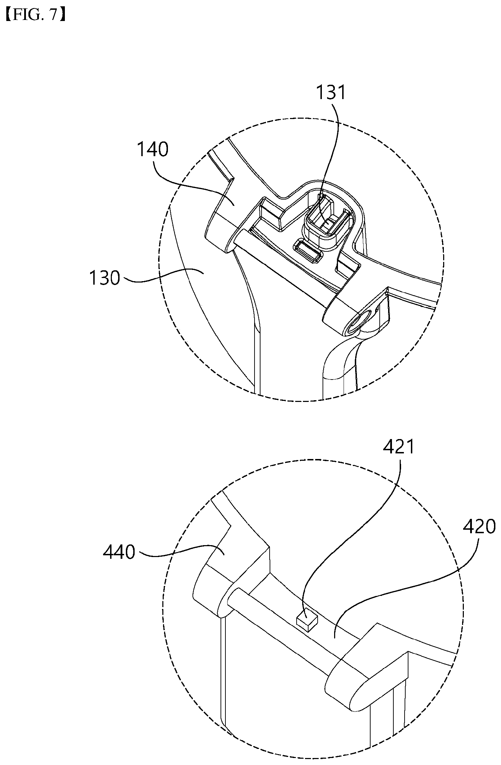

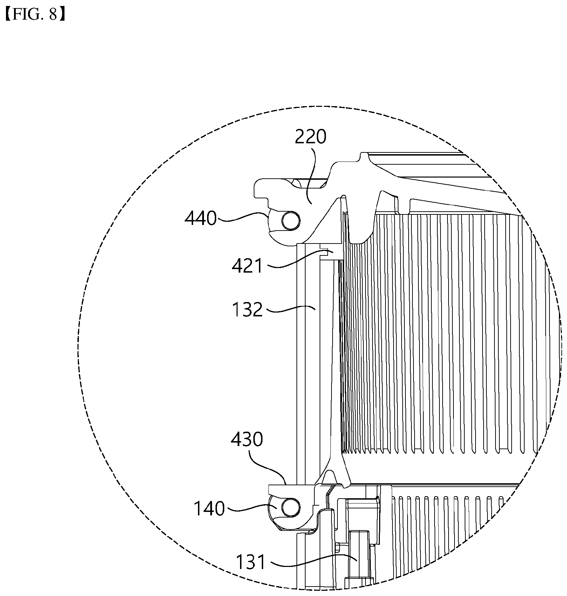

FIG. 7 is a perspective view showing a first safety sensor portion of the main container and a second safety sensor portion of the extension container of FIG. 2, and FIG. 8 is an enlarged view of a region VIII of FIG. 5.

Referring to FIGs. 7 and 8, the main container body 130 may include a first safety sensor portion 131. The first safety sensor portion 131 detects whether the container lid 200 is open, and when an expansion space 410 of the main container body 130 is closed or open by the container lid 200, the first safety sensor portion 131 may detect its closed state and open state.

The first safety sensor portion 131 may be formed in the main container body 130. A position where the first safety sensor portion 131 is formed is not limited, but it is preferable that it is formed at a position adjacent to the container lid 200 to accurately detect whether the container lid 200 is open. In the drawings, the first safety sensor portion 131 is illustrated as being formed at a position adjacent to the main container coupling portion 140, but it may be formed at a position adjacent to the main container handle 150 or at a position adjacent to an upper edge of the main container body 130.

When the first safety sensor portion 131 detects the open state, an operation of the processing member P that processes food materials may be stopped for the safety of a user. When the first safety sensor portion 131 detects the closed state, the processing member P may continue to operate. The first safety sensor portion 131 may be formed in various forms such as a contact type, a non-contact type, a pressure type, and the like. For example, in a case that the first safety sensor portion 131 is a contact type, the first safety sensor portion 131 may be in contact with a sensor operating portion (not shown in the drawings) of the container lid 200 in the closed or open state, which will be described later. The first safety sensor portion 131 may be in contact with the sensor operating portion in the closed state or may be in contact with the sensor operating portion in the open state.

The first safety sensor portion 131 may be linked with a second safety sensor portion 421 of an extension container body 420, which will be described later. That is, in a case that the extension container 400 is mounted on the main container 100, when the second safety sensor portion 421 of the extension container body 420 detects an open or closed state of the extension container 400, the second safety sensor portion 421 may also detect the open or closed state. For example, when the first safety sensor portion 131 is a contact type, between the second safety sensor portion 421 and the first safety sensor portion 131, a signal transmission member 132 that transmits a contact of the second safety sensor portion 421 may be disposed. The signal transmission member 132 may be configured to transmit electrical signals such as current or physical signals such as external force or pressure. Ultimately, the body 300 may stop the operation of the processing member P based on the detection of at least one of the first safety sensor portion 131 and the second safety sensor portion 421.

However, there are cases where the second safety sensor portion 421 cannot detect whether the container lid 200 is open due to its failure or damage. In preparation for this case, the signal transmission member 132 may be disposed adjacent to the container lid 200. For example, when the first safety sensor portion 131 is a contact type, the signal transmission member 132 is disposed to a position adjacent to an upper portion of the extension container 400 and may be in contact with the container lid 200. A physical contact between the container lid 200 and the signal transmission member 132 is transmitted to the first safety sensor portion 131, and the first safety sensor portion 131 may detect whether the container lid 200 is open. This signal transmission member 132 may allow the first safety sensor portion 131 to detect whether the container lid 200 is open, even when the second safety sensor portion 421 is not provided in the extension container 400.

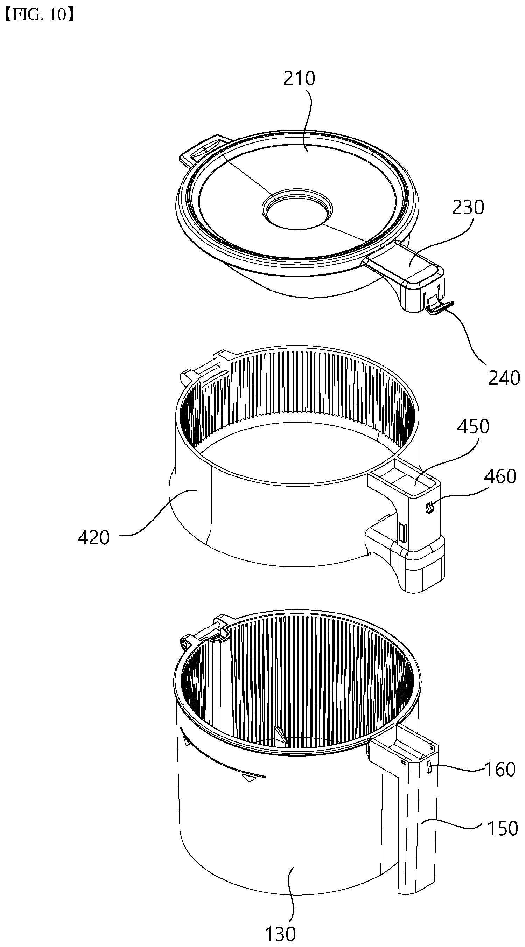

Referring back to FIGs. 1 to 5, the main container handle 150 is a portion held by a user such that the user can easily carry the main container 100. The main container handle 150 which will be described later may be coupled to the extension container handle 450. That is, as an upper portion of the main container handle is inserted and coupled to an insertion groove 451 of the main container handle 150, a mounting state of the extension container 400 may be maintained stably. A locking protrusion 160 (see FIG. 10) may be formed on an outer surface of the main container handle 150. The locking protrusion 160 may be caught and coupled to a locking hook 240 (see FIG. 10) of a container lid handle 230, which will be described later. A coupling of the locking protrusion 160 and the locking hook 240 may enhance a bond between the main container 100 and the container lid 200.

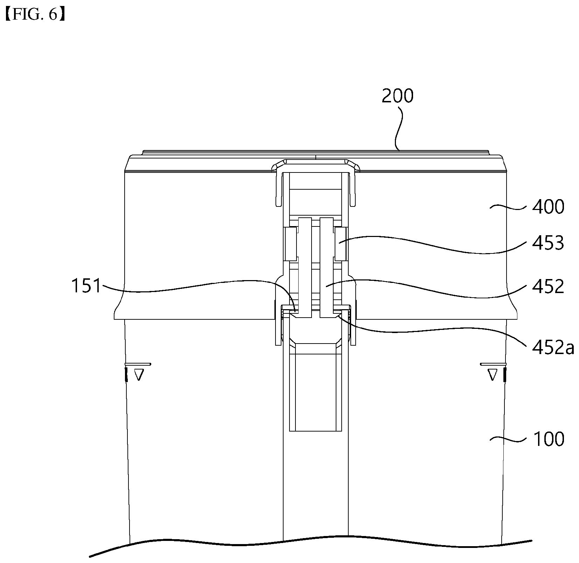

FIG. 6 is a cross-sectional view taken along line VI-VI of FIG. 2.

Referring to FIG. 6, to maintain the mounting state of the extension container more stably, a locking jaw 151 may be formed on the main container handle 150, and a hook portion 452 including a hook protrusion 452a may be formed on an extension container handle which will be described later. The hook protrusion 452a may be caught on the locking jaw 151. The hook protrusion 452a and the locking jaw 151 will be described later.

The main container coupling portion 140 is a portion that is caught and coupled to an extension container lower coupling portion 430 and a container lid coupling portion 220, which will be described later. As the extension container 400 is selectively mounted on the main container 100, the main container coupling portion 140 may also be coupled to either the extension container lower coupling portion 430 or the container lid coupling portion 220. As it will be described later, since the extension container lower coupling portion 430 and the container lid coupling portion 220 are formed in a same shape, the main container coupling portion 140 may be coupled to the extension container lower coupling portion 430 and the container lid coupling portion 220. When the extension container 400 is mounted, the main container coupling portion 140 may be coupled to the extension container lower coupling portion 430. When the extension container 400 is not mounted, the main container coupling portion 140 may be coupled to the container lid coupling portion 220.

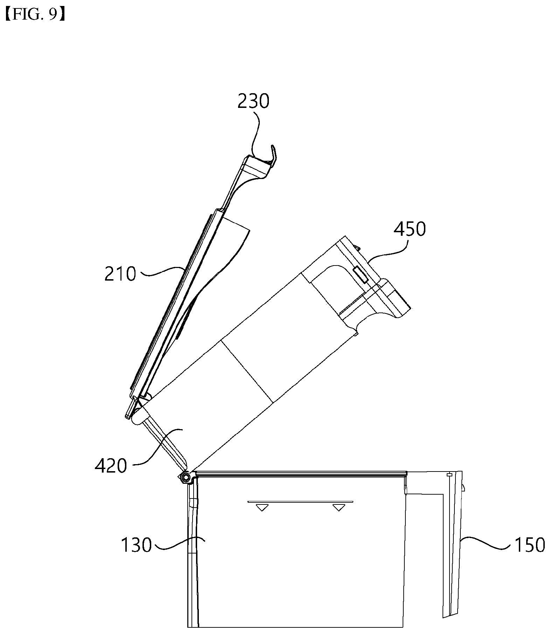

FIG. 9 is a side view of the main container handle, the extension container handle, and the container lid in an open state according to the first embodiment of the present disclosure, and FIG. 10 is an exploded perspective view of the main container, the extension container, and the container lid according to the first embodiment of the present disclosure.

Referring to FIGs. 9 and 10, the container lid 200 opens and closes the accommodation space 110 of the main container 100 or the expansion space 410 of the extension container 400, which may be detachably coupled to the main container 100 or the extension container 400. That is, when the extension container 400 is not coupled to the main container 100, the container lid 200 may cover at least a portion of the accommodation space 110 of the main container 100. When the extension container 400 is coupled to the main container 100, it may cover at least a portion of the expansion space 410 of the extension container 400.

The container lid 200 may include a container lid body 210, the container lid coupling portion 220, and the container lid handle 230. The container lid body 210 covers a portion of the accommodation space 110 of the main container 100 or the expansion space 410 of the extension container 400, which may be formed in a shape of a plate with a through hole 211 formed in its center. The container lid coupling portion 220 may be detachably coupled to the main container coupling portion 140 or an extension container upper coupling portion 440 which will be described later. Whether the container lid 200 is open may be detected by the above-described first safety sensor portion 131 and the second safety sensor portion 421. The container lid 200, when the first safety sensor portion 131 and the second safety sensor portion 421 are contact types. may have a sensor operating portion formed in a protrusion shape capable of contacting the first safety sensor portion 131 and the second safety sensor portion 421.

The container lid handle 230 is a portion held by a user such that the user can easily carry the container lid 200. The container lid handle 230 may be more securely coupled to the main container 100 or the extension container 400. That is, the locking hook 240 formed on the container lid handle 230 may be caught and coupled to the locking protrusion 160 of the main container handle 150 described above, or may be caught and coupled to the locking protrusion 460 of the extension container handle 450, which will be described later.

The body 300 on which the main container 100 is seated may operate the processing member P which is connected thereto._ The body 300 may include a control module (not shown in the drawings) that controls a motor that operates the processing member P, a rotation speed of the motor, time, and the like. The control module may operate the processing member P, by operating a screw S coupled to the processing member P. The screw S and the processing member P may be rotated at different rotational speeds from each other by a reducer, and the like. The body 300 may include the juice extraction portion 600 that generates juice by compressing cut food materials put through the input hole of the main container 100. While the input food materials move downward along a spiral of the rotating screw S, they are compressed or pulverized by the screw S and a juice extraction container 630. In the above course, juice may be released to a juice outlet 610 through a release hole formed in the juice extraction container 630, and juiced food material residues may be released to a residue outlet 620.

In particular, when the first safety sensor portion 131 and the second safety sensor portion 421 detect the open state of the main container 100 or the extension container 400, the body 300 may stop the operation of the processing member P.

Referring to FIG. 4, the extension container 400 forms the expansion space 410 that expands the accommodation space 110 of the main container 100, and a space therein is connected to the accommodation space 110 of the main container 100 and the extension container 400 may be selectively mounted on the main container 100. When the accommodation space 110 of the main container 100 cannot accommodate additional food materials, the extension container 400 may be mounted on the main container 100. Not only one but several extension containers 400 may be mounted stacked on after another.

The extension container 400 may include the extension container body 420, the extension container lower coupling portion 430, and the extension container upper coupling portion 440. The space in the extension container body 420 may be connected to the accommodation space 110 of the main container 100. The expansion space 410 of the extension container body 420 may accommodate additional food materials added during a food material processing.

The extension container body 420 may be formed in a cylindrical shape with its upper portion and lower portion open, to form the expansion space. The extension container body 420 may be formed in various shapes, such as a cylinder or a square cylinder with its upper portion and lower portion open. The extension container body 420 may include a side wall 422 forming the expansion space 410. A portion of the side wall 422 may be formed to be inclined outward as it goes upward. As the portion of the side wall 422 is inclined, more expansion space 410 may be secured.

The extension container lower coupling portion 430 may be formed on one lower side of the extension container body 420, and the extension container upper coupling portion 440 may be formed on an upper side thereof.

The extension container body 420 may include the second safety sensor portion 421. The second safety sensor portion 421 may detect whether the container lid 200 is open, similar to the first safety sensor portion 131 of the main container body 130 described above. Detection targets of the second safety sensor portion 421 and the first safety sensor portion 131 are the expansion space 410 of the extension container 400 and the accommodation space 110 of the main container body 130, respectively, their function and structure are same with only difference therebetween being the detection targets, and detailed descriptions thereof will be omitted.

When the extension container 400 is mounted, whether to stop the processing member may be determined by detecting the open and closed states of the extension container body 420. When the second safety sensor portion 421 detects the open or closed state of the extension container body 420, the first safety sensor portion 131 may also detect the open or closed state of the extension container body 420 in conjunction with the second safety sensor portion 421. As such, even when the extension container 400 is mounted, the second safety sensor portion 421 is in conjunction with the first safety sensor portion 131, and thus, safety accidents may be prevented.

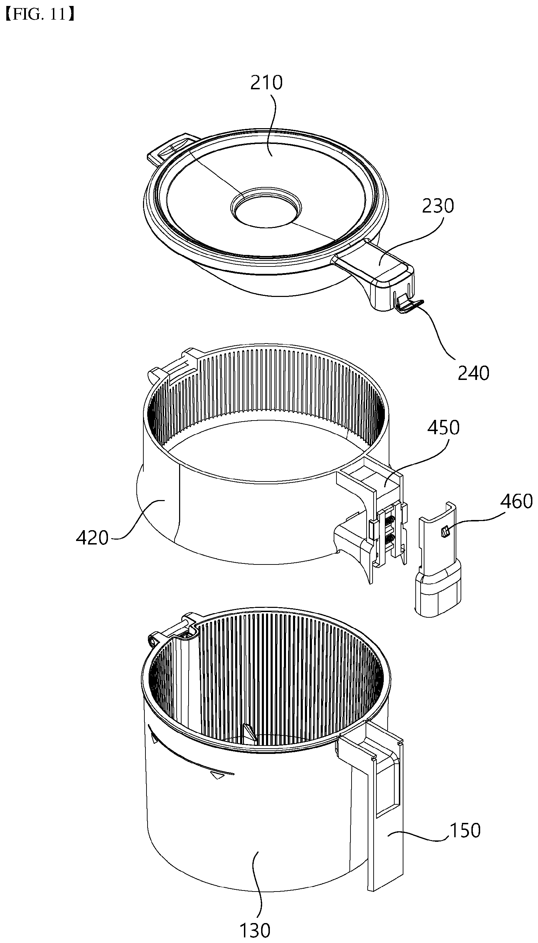

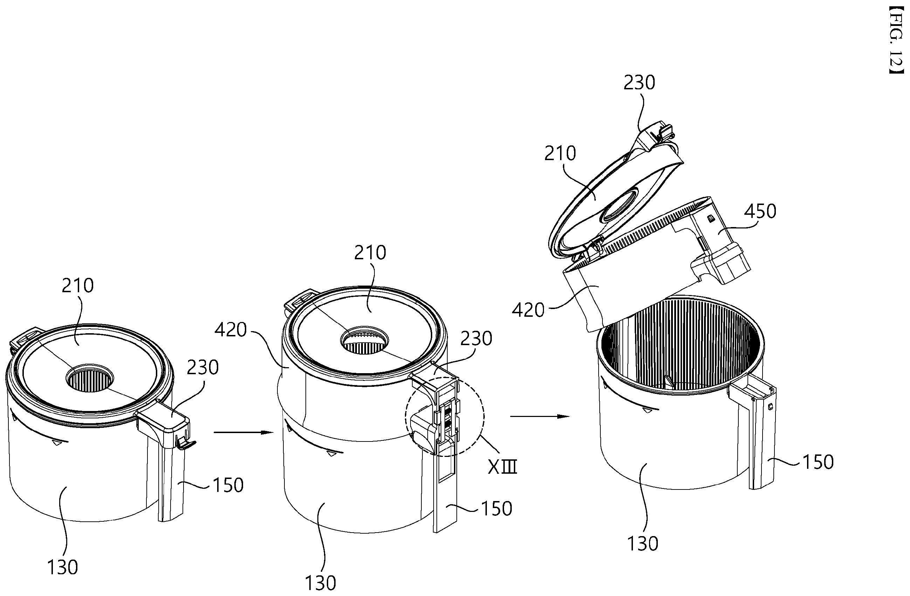

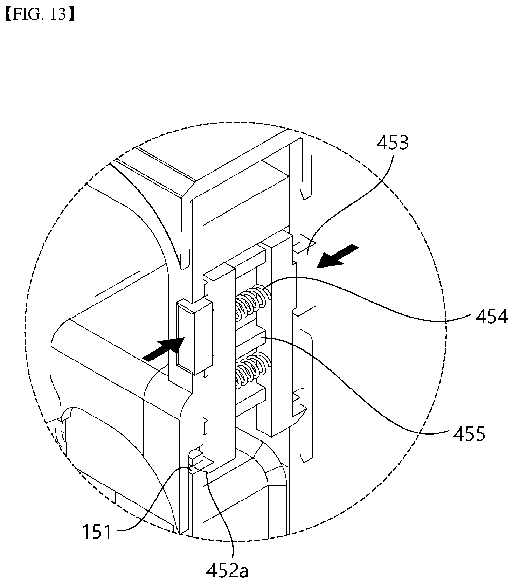

FIG. 11 is a partially exploded view of an extension container handle of FIG. 12. FIG. 12 is a view showing a process in which the body of the extension container and the main container body of the juice extractor according to the first embodiment of the present disclosure are separated, and the lid of the extension container is open, and FIG. 13 is an enlarged view of a region XIII of FIG. 12.

Referring to FIGs. 11 to 13, the extension container handle 450 is a portion held by a user such that the user can easily carry the extension container 400. The extension container handle 450 may be coupled to the main container handle 150 described above. As the extension container body 420 is mounted on the main container body 130, a lower portion of the extension container handle 450 and an upper portion of the main container handle 150 may be coupled. The insertion groove 451 may be formed in the lower portion of the extension container handle 450 such that a portion of the upper portion of the main container handle 150 can be inserted. As the upper portion of the main container handle 150 is inserted and coupled to the insertion groove 451 of the extension container handle 450, the mounting state of the extension container 400 may be maintained stably.

Referring to FIG. 6, to maintain the mounting state of the extension container 400 more stably, the hook portion 452 may be formed on the extension container handle 450. The hook protrusion 452a of the hook portion 452 may be caught on the locking jaw 151 formed on the main container handle 150. An unlock button 453 that releases a locking state between the hook protrusion 452a and the locking jaw 151 may be formed on the extension container handle 450. The unlock button 453 may be formed in a same number as that of the hook portions 452. The unlock button 453 may release the locking state by pushing the hook portion 452. A path along which the hook portion 452 is pushed may be guided by a guide member 455. By pressing the unlock button 453, the user may release the locking state between the hook protrusion 452a and the locking jaw 151 and separate the extension container 400 from the main container 100.

In FIG. 6, it is illustrated that the hook portion 452 and the unlock button 453 are formed on the extension container handle 450, and the locking jaw 151 is formed on the main container handle 150, but conversely, the hook portion 452 and the unlock button 453 may be formed on the main container handle 150, and the hook portion 452 may be formed on the extension container handle 450.

Referring back to FIGs. 11 to 13, to enhance the locking state between the hook protrusion 452a and the locking jaw 151, an elastically expandable spring 454 may be disposed between the hook portions 452. The spring 454 prevents the locking state between the hook protrusion 452a and the locking jaw 151 from being easily released, and the spring 454 is preferably a compression spring that resists the compression force that can push the hook portion 452.

In addition, the locking protrusion 460 may be formed on an outer surface of the extension container handle 450. As described above, the locking protrusion 460 of the extension container handle 450 may be coupled to the locking hook 240 of the container lid handle 230. Since the locking protrusion 460 of the extension container handle 450 and the locking protrusion 160 of the main container handle 150 are common in that they are caught on the locking hook 240 of the container lid handle 230, they may be formed in a same position and shape.

Referring to FIG. 12, a process in which a locking state of the extension container handle 450 and the main container handle 150 is released and a locking state of the extension container 400 and the container lid handle 230 is released will be briefly described. First, when the unlock button 453 is pressed by the user, the unlock button 453 pushes the hook portion 452 and a locking state of the hook protrusion 452a and the locking jaw 151 may be released. By releasing the locking state of the hook protrusion 452a and the locking jaw 151, the locking state of the extension container handle 450 and the main container handle 150 may be released. Moreover, as the locking hook 240 of the container lid handle 230 is displaced by the user, a locking state between the locking hook 240 and the locking protrusion 460 of the extension container handle 450 may be released.

Meanwhile, a seating groove (not shown in the drawings) may be formed on a lower end of the extension container 400 such that the extension container 400 is stably seated on an upper end of the main container 100. The seating groove may be formed on the lower end of the extension container 400, that is, on a lower end of the extension container body 420. By inserting an upper end of the main container body 130 into the seating groove, the mounting state of the extension container 400 may be maintained stably. The seating groove may not be formed on the lower end of the extension container body 420, but the seating groove may be formed on the upper end of the main container body 130. That is, the seating groove may be formed on either the lower end of the extension container body 420 or the upper end of the main container body 130.

Referring to FIG. 5, the extension container lower coupling portion 430 may be detachably coupled to the main container coupling portion 140.

The extension container upper coupling portion 440 is a portion coupled to the container lid coupling portion 220 described above. As the extension container 400 is selectively mounted on the main container 100, the extension container upper coupling portion 440 may also be coupled to the container lid coupling portion 220. The container lid coupling portion 220 is same as the main container coupling portion 140 described above in that it is capable of being coupled to the container lid coupling portion 220. Accordingly, the container lid coupling portion 220 may be formed in a same shape as that of the main container coupling portion 140.

In the above description, considering that the main container coupling portion 140 is coupled to the container lid coupling portion 220 or the extension container lower coupling portion 430, and the extension container upper coupling portion 440 is coupled to the container lid coupling portion 220, the main container coupling portion 140 and the extension container upper coupling portion 440 have an identical point in a coupling structure. Three coupling structures, that is, a coupling structure of the main container coupling portion 140 and the container lid coupling portion 220, a coupling structure of the main container coupling portion 140 and the extension container lower coupling portion 430, and a coupling structure of the extension container upper coupling portion 440 and the container lid coupling portion 220 may be same. Accordingly, the extension container 400 or the container lid 200 may be coupled to the main container 100, and the container lid 200 may be coupled to the extension container.

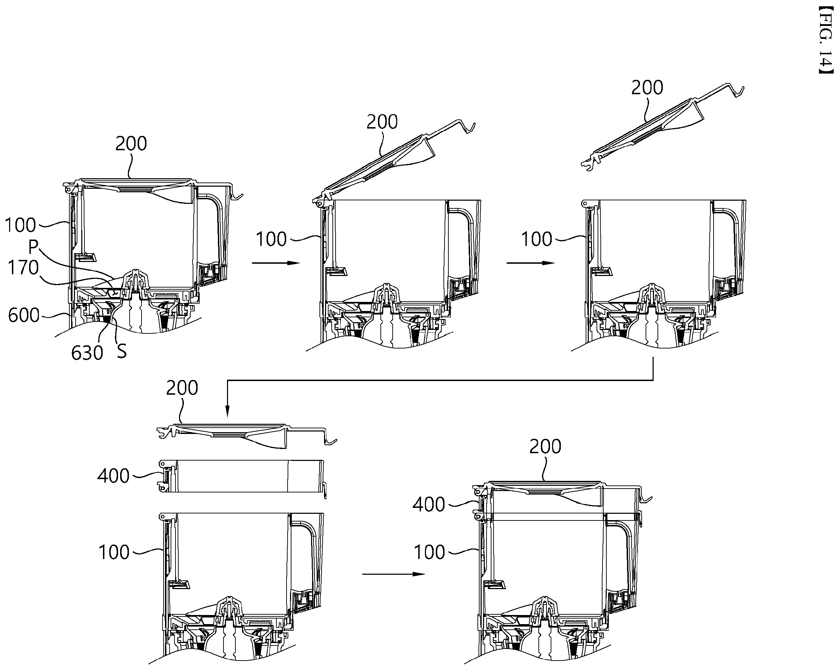

FIG. 14 is a cross-sectional view showing a process of mounting the extension container according to the first embodiment of the present disclosure.

Referring to FIG. 14, first, the main container coupling portion 140 and the container lid coupling portion 220 are disconnected and the container lid 200 is separated from the main container 100. Next, the main container coupling portion 140 and the lower coupling portion of the extension container 400 are coupled and the extension container 400 is seated on the main container 100. The separated container lid 200 is coupled to the extension container 400. After the separated container lid 200 is coupled to the extension container 400, the extension container 400 may be seated on the main container 100.

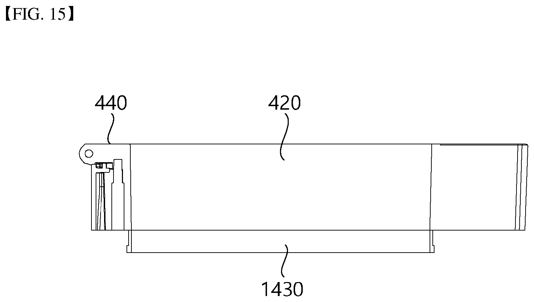

FIG. 15 is a cross-sectional view showing another embodiment of the main container and the extension container of FIG. 5.

Referring to FIG. 15, an extension container lower coupling portion 1430 of the extension container 400 may be formed on the lower end of the extension container body 420. The extension container lower coupling portion 1430 may extend downward from the lower end of the extension container body 420. In this case, a coupling structure of the main container coupling portion 140 and the container lid coupling portion 220 and a coupling structure of the extension container upper coupling portion 440 and the container lid coupling portion 220 are same, and the extension container lower coupling portion 1430 may be inserted into the main container body 130.

To securely couple the extension container lower coupling portion 1430 and the main container body 130, screw-threads (not shown in the drawings) corresponding to an outer peripheral surface of the extension container lower coupling portion 1430 and an inner peripheral surface of the main container body 130 may be formed, respectively.

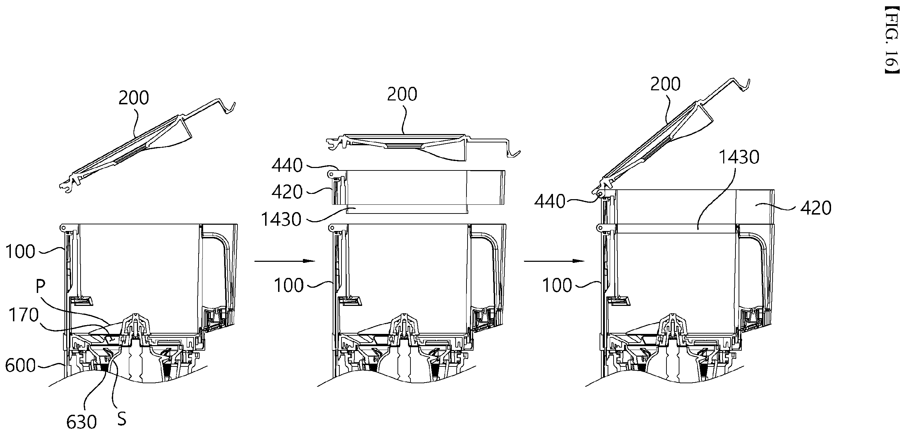

FIG. 16 is a cross-sectional view showing a process of mounting the extension container of FIG. 15.

Referring to FIG. 16, first, the main container coupling portion 140 and the container lid coupling portion 220 are disconnected and the container lid 200 is separated from the main container 100. Next, as the extension container lower coupling portion 1430 is inserted into the main container 100, the extension container 400 is coupled to the main container 100. The separated container lid 200 is coupled to the extension container 400.

FIG. 17 is a cross-sectional view of a juice extractor according to a second embodiment of the present disclosure.

Referring to FIG. 17, the juice extractor 10 according to the second embodiment of the present disclosure includes a main container 100, a container lid 200, a body 300, an extension container 1400, and a lifting portion 500. For convenience of description, same reference numerals for parts similar to those of the first embodiment are used, and descriptions of parts common to the first embodiment are omitted.

Unlike the first embodiment, the main container 100 and the extension container 1400 may not be coupled to the container lid 200. The container lid 200 may be coupled to the lifting portion 500. One side of the lifting portion 500 may be coupled to the main container 100, and the other side may be coupled to the container lid 200. A length of the lifting portion 500 may change. When the length of the lifting portion 500 changes, the other side of the lifting portion 500 coupled to the container lid 200 may be lifted. Accordingly, a space may be formed between the container lid 200 and the main container 100. In this space, the extension container 1400 may be coupled to the main container 100. An extension container handle 450 that can be coupled to a main container handle 150 of the main container 100 may be formed on the extension container 1400.

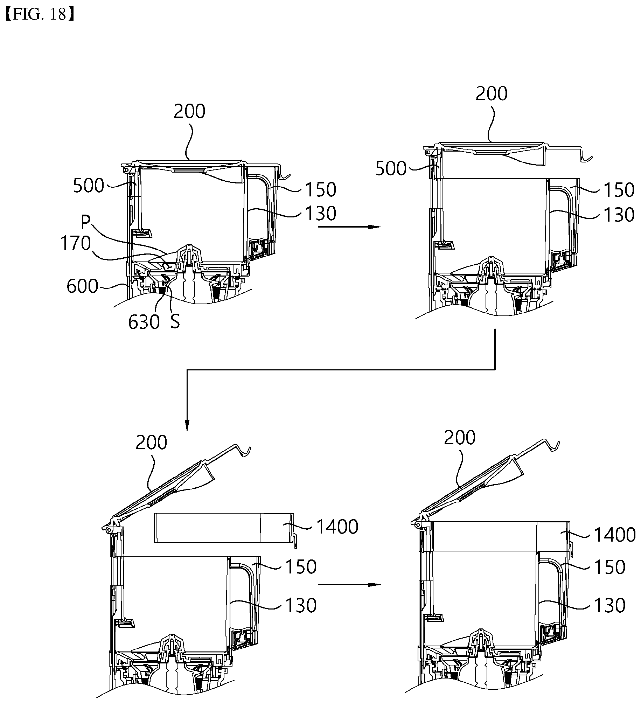

FIG. 18 is a cross-sectional view showing a process of mounting the extension container according to the second embodiment of the present disclosure.

Referring to FIG. 18, a length of a lifting platform changes and a space is formed between the container lid 200 and the main container 100. The extension container 1400 is mounted on the main container 100 in this space. Next, the container lid 200 opens and closes an expansion space 410 of the extension container 1400.

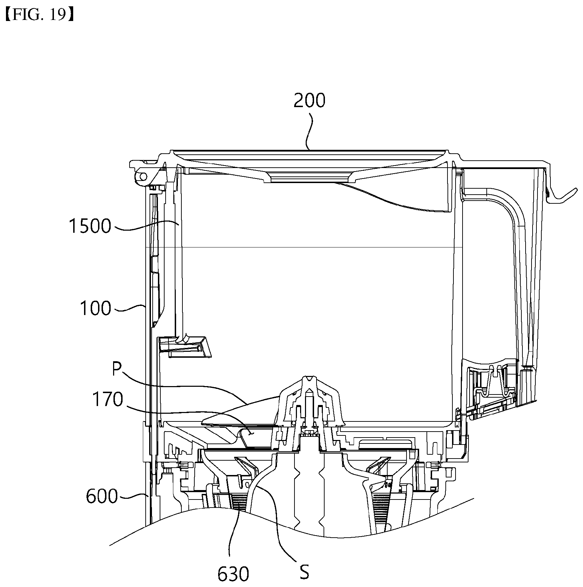

FIG. 19 is a cross-sectional view of a juice extractor according to a third embodiment of the present disclosure.

Referring to FIG. 19, a juice extractor 10 according to the third embodiment of the present disclosure includes a main container 100, a body 300, an extension container 2400, a lifting portion 1500, and a container lid 200. For convenience of description, same reference numerals for parts similar to those of the first embodiment and the second embodiment are used, and descriptions of parts common to the first embodiment and the second embodiment are omitted.

The extension container 2400 may be inserted and installed into an accommodation space 110 of the main container 100. The lifting portion 1500 may connect the main container 100 and the extension container 2400. One side of the lifting portion 1500 may be connected to the main container 100 and the other side may be connected to the extension container 2400. In addition, the container lid 200 may be coupled to a portion of the other side of a lifting platform that is not connected to the extension container 2400. As a length of the lifting portion 1500 changes, the extension container 2400 may be exposed in the accommodation space 110 of the main container 100. That is, when the length of the lifting portion 1500 becomes longer, the extension container 2400 may be lifted to an upper portion of the main container 100.

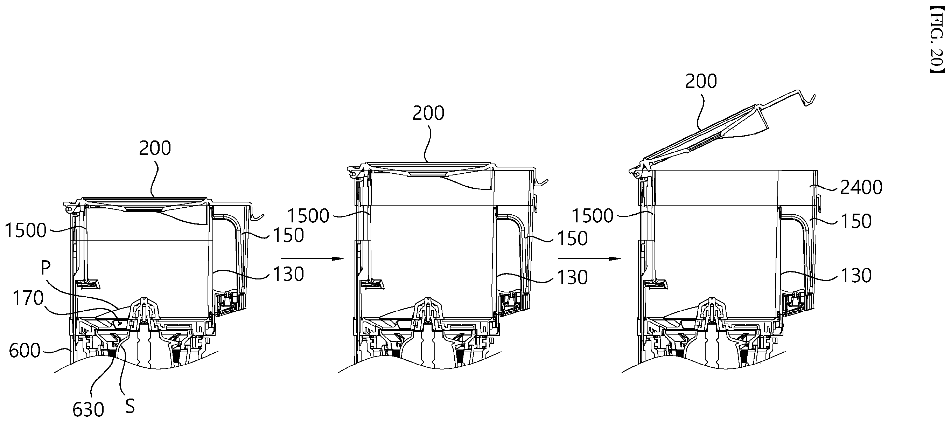

FIG. 20 is a view showing a process of lifting the extension container according to the third embodiment of the present disclosure.

Referring to FIG. 20, in a state that the extension container 2400 is completely inserted into the accommodation space 110, the length of the lifting portion 1500 becomes longer. As the length of the lifting portion 1500 increases, the extension container 2400 is exposed to the outside of the accommodation space 110. When the length of the lifting portion 1500 is changed to a maximum length, the extension container 2400 is completely exposed to the outside. Conversely, when the length of the lifting portion 1500 is shortened, the extension container 2400 is inserted into the accommodation space 110.

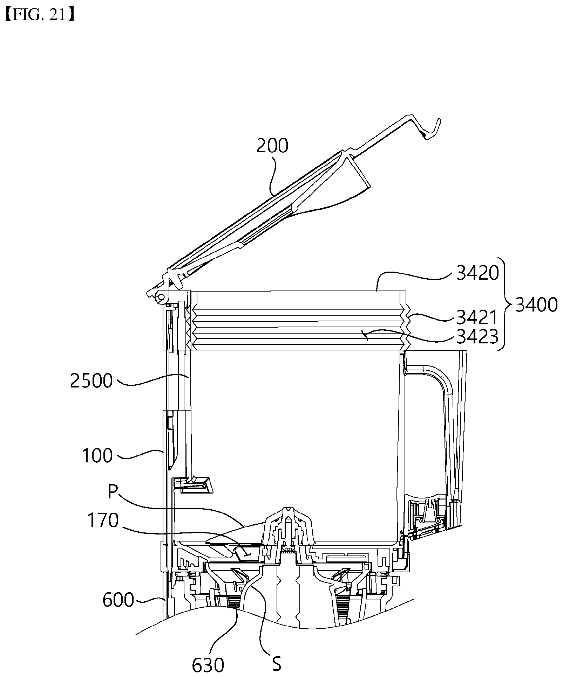

FIG. 21 is a cross-sectional view of a juice extractor according to a fourth embodiment of the present disclosure.

Referring to FIG. 21, a juice extractor 10 according to the fourth embodiment of the present disclosure includes a main container 100, a body 300, an extension container 3400, a container lid 200, and a lifting portion 2500. For convenience of description, same reference numerals for parts similar to those of the first embodiment, the second embodiment, and the third embodiment are used, and descriptions of parts common to the first embodiment, the second embodiment, and the third embodiment are omitted.

An extension container body 3420 is mounted on an upper portion of the main container 100. The extension container 3400 may include a pleated portion 3421 that is folded or unfolded such that a volume thereof changes. The pleated portion 3421 may be folded or unfolded by the lifting portion 2500.

The lifting portion 2500 connects the main container 100 and the extension container 3400 and its length may change. As the length of the lifting portion 2500 changes, the pleated portion 3421 of the extension container 3400 may be unfolded or folded. As the pleated portion 3421 of the extension container 3400 is unfolded or folded, a volume of an expansion space 3423 of the extension container 3400 may increase or decrease.

As seen above, the container lid 200 is compatible with each of the main container 100 and the extension container (400, 1400, 2400, 3400) and is detachable, and thus, the present invention has an advantage of reducing manufacturing costs and improving user convenience. The present invention has an advantage that a size of the juice extractor 10 before the extension container (400, 1400, 2400, 3400) is added may be minimized to facilitate storage in a narrow space by freely expanding the accommodation space for food materials. The present invention has an advantage of preventing safety accidents by detecting whether the main container 100 and the extension container (400, 1400, 2400, 3400 are open and closed and stopping them when they are open. The present invention has an advantage of improving convenience of use by expanding an inlet of the extension container (400, 1400).

Although preferred embodiments of the present invention have been described above with reference to the accompanying drawings, since the embodiments described in this specification and the configuration shown in the drawings are only one of the most preferred embodiments of the present invention and do not represent the entire technical idea of the present invention, it should be understood that at the time of filing this application, there may be various equivalents and modifications that can replace them. Therefore, the embodiments described above should be understood in all respects as exemplary and not restrictive, the scope of the present invention is represented by the claims described below rather than the detailed description, and it should be interpreted that all changes or modifications derived from the meaning and scope of the claims and equivalents thereof are included in the scope of the present invention.

**[Description of Reference Numerals]**

| | | | |
|---|---|---|---|
| 10: | Juice extractor | 100: | Main container |
| 110: | Accommodation space | 130: | Main container body |
| 131: | First safety sensor portion | 132: | Signal transmission member |
| 140: | Main container coupling portion | 150: | Main container handle |
| 151: | Locking jaw | 160: | Locking protrusion |
| 170: | Input hole | 200: | Container lid |
| 210: | Container lid body | 211: | Through hole |
| 220: | Container lid coupling portion | 230: | Container lid handle |
| 240: | Locking hook | 300: | Body |
| 400: | Extension container | 1400: | Extension container |
| 2400; | Extension container | 3400: | Extension container |
| 3420: | Extension container body | 3421: | Pleated portion |
| 1423: | Expansion space | 410: | Expansion space |
| 420: | Extension container body | 421: | Second safety sensor portion |
| 422: | Side wall | 423: | Seating groove |
| 430: | Extension container lower coupling portion | | |
| 1430: | Extension container lower coupling portion | | |
| 440: | Extension container upper coupling portion | | |
| 450: | Extension container handle | 451: | Insertion groove |
| 452: | Hook portion | 452a: | Hook projection |
| 453: | Unlock button | 454: | Spring |
| 455: | Guide member | 460: | Locking protrusion |
| 500: | Lifting portion | 1500: | Lifting portion |
| 2500: | Lifting portion | 600: | Juice extraction portion |
| 610: | Juice outlet | 620: | Residue outlet |
| P: | Processing member | | |
| S: | Screw | | |

## Claims

1. A juice extractor, comprising:
a main container including an accommodation space in which food materials are accommodated and a processing member provided in the accommodation space to process the food materials;
a container lid detachably coupled to the main container and covers at least a portion of the accommodation space;
a body on which the main container is seated and connected to the processing member to operate the processing member; and
an extension container selectively coupled between the main container and the container lid, and forming an expansion space connected to the accommodation space,
wherein once the extension container is coupled to the main container, the container lid is detachably coupled to the extension container and covers at least a portion of the expansion space.

2. The juice extractor of claim 1, wherein:
the main container includes a main container body in which the accommodation space is formed, and a main container coupling portion formed on one side of the main container body,
the extension container includes an extension container body having a space connected to the accommodation space, an extension container lower coupling portion formed on one lower side of the extension container body and detachable from the main container coupling portion, and an extension container upper coupling portion formed on one upper side of the extension container body,
the container lid includes a container lid body covering at least a portion of accommodation space or the expansion space, and a container lid coupling portion formed on one side of the container lid body and detachable from the main container coupling portion or the extension container upper coupling portion.

3. The juice extractor of claim 2,
wherein a coupling structure of the main container coupling portion and the container lid coupling portion, a coupling structure of the main container coupling portion and the extension container lower coupling portion, and a coupling structure of the extension container upper coupling portion and the container lid coupling portion are same.

4. The juice extractor of claim 1, wherein:
the main container includes a main container body forming the accommodation space, and a main container coupling portion formed on the main container body,
the extension container includes an extension container body forming an expansion space, an extension container lower coupling portion formed in a lower portion of the extension container body and detachable from the main container body, and an extension container upper coupling portion formed on one upper side of the extension container body, and
the container lid includes a container lid body covering at least a portion of accommodation space or the expansion space, and a container lid coupling portion formed on one side of the container lid body and detachable from the main container coupling portion or the extension container upper coupling portion.

5. The juice extractor of claim 4, wherein:
a coupling structure of the main container coupling portion and the container lid coupling portion and a coupling structure of the extension container upper coupling portion and the container lid coupling portion are same, and
the extension container lower coupling portion is inserted into the main container body.

6. The juice extractor of claim 5, wherein:
the extension container lower coupling portion extends downward from a lower end of the extension container body, and
screw-threads corresponding to an outer peripheral surface of the extension container lower coupling portion and an inner peripheral surface of the main container body are formed, respectively.

7. The juice extractor of claim 2, wherein:
a main container handle capable of being held is formed on the other side of the main container body, and
an extension container handle coupled to the main container handle is formed on the other side of the extension container body.

8. The juice extractor of claim 4, wherein:
a main container handle capable of being held is formed on the other side of the main container body, and
an extension container handle coupled to the main container handle is formed on the other side of the extension container body.

9. The juice extractor of claim 3, wherein:
the main container body includes a first safety sensor portion detecting whether the container lid is open,
the extension container body includes a second safety sensor portion detecting whether the container lid is open, and
the body stops the operation of the processing member based on an operation of at least one of the first safety sensor portion and the second safety sensor portion.

10. The juice extractor of claim 5, wherein:
the main container body includes a first safety sensor portion detecting whether the container lid is open,
the extension container body includes a second safety sensor portion detecting whether the container lid is open, and
the body stops the operation of the processing member based on an operation of at least one of the first safety sensor portion and the second safety sensor portion.

11. The juice extractor of claim 2, wherein:
the extension container body includes a side wall mounted on the main container body, and
a portion of the side walls is formed to be inclined outward as it goes upward.

12. The juice extractor of claim 4, wherein:
the extension container body includes a side wall mounted on the main container body, and
a portion of the side walls is formed to be inclined outward as it goes upward.

13. A juice extractor, comprising:
a main container including an accommodation space in which food materials are accommodated and a processing member provided in the accommodation space to process the food materials;
a container lid detachably coupled to the main container and covers at least a portion of the accommodation space;
a body on which the main container is seated and connected to the processing member to operate the processing member;
an extension container selectively coupled between the main container and the container lid, and forming an expansion space connected to the accommodation space; and
a lifting portion with one side coupled to the main container and the other side coupled to the container lid.
wherein in a case that the lifting portion forms a space between the container lid and the main container and its length changes, the extension container is capable of being coupled to the main container.

14. A juice extractor, comprising:
a main container including an accommodation space in which food materials are accommodated and a processing member provided in the accommodation space to process the food materials;
a body on which the main container is seated and connected to the processing member to operate the processing member;
an extension container inserted and installed in the accommodation space, and forming an expansion space connected to the accommodation space;
a lifting portion connecting the main container and the extension container; and
a container lid coupled to the lifting portion and covering at least a portion of the expansion space,
wherein a length of the lifting portion changes such that the extension container is exposed in the accommodation space.

15. A juice extractor, comprising:
a main container including an accommodation space in which food materials are accommodated and a processing member provided in the accommodation space to process the food materials;
a body on which the main container is seated and connected to the processing member to operate the processing member;
an extension container mounted on an upper portion of the main container and formed with a pleated portion that folds or unfolds to form an expansion space;
a container lid detachably coupled to the extension container and partially covers thereof; and
a lifting portion connecting the main container and the extension container,
wherein a length of the lifting portion changes such that the pleated portion of the extension container is folded or unfolded.
